# EUROPÄISCHE PATENTSCHRIFT

(11) **EP 1 359 511 B1**
(45) Veröffentlichungstag und Bekanntmachung des Hinweises auf die Patenterteilung: **15.03.2006**
(21) Anmeldenummer: 02405354.8
(22) Anmeldetag: 30.04.2002
(51) Int. Cl.: G06F 13/42

(54) **Vorrichtungsanordung und Verfahren zur Zuordnung von Adressbereichen zu Modulen,die mit einem VME-Bus verbunden sind**
Apparatus and method for addressing modules connected to a VME-bus
Dispositif et méthode d'adressage de modules reliés à un bus VME

(43) Veröffentlichungstag der Anmeldung: 05.11.2003
(73) Patentinhaber: HaslerRail AG, 3027 Bern (CH)
(72) Erfinder: Aellig, Markus, 3132 Riggisberg (CH); Schneider, Daniel, 1700 Fribourg (CH)
(74) Vertreter: BOVARD AG

(56) Entgegenhaltungen:
- US-A- 5 175 536
- US-A- 5 307 475

## Beschreibung

Die vorliegende Erfindung betrifft eine Vorrichtungsanordnung und ein Verfahren zur Zuordnung von Adressbereichen zu einem oder mehreren Modulen, die mit einem VME-Bus verbunden sind. Insbesondere betrifft die vorliegende Erfindung eine Vorrichtungsanordnung und ein Verfahren zur Zuordnung von Adressbereichen, die jeweils durch eine Basisadresse definiert sind, zu einem oder mehreren mit einem VME-Bus verbundenen elektronischen Modulen.

Der VME-Bus ist einer der meist verwendeten 16/32-Bit Rückwandbusse, mit dem elektronische Module mittels Steckkontakten entfembar verbunden werden können. Spezifikationen für den VME-Bus wurden durch die Normierungskomitee IEEE P1014 (Busnorm IEEE 1014) und IEC 47b (Busnorm IEC 821) erarbeitet. Die Normspezifikationen für den VME-Bus (IEEE 1014 und IEC 821) wurden in der Revision A bereits im Jahre 1981 veröffentlicht. Seither wurden zahlreiche Ergänzungen und Verbesserungen am VME-Bus vorgenommen und in neuere Revisionen der Normspezifikationen für den VME-Bus aufgenommen. Die heute gültige Revision C.1 der Normspezifikationen des VME-Busses wurde im Jahr 1995 freigegeben.

Der VME-Bus ermöglicht flexibles Konfigurieren, Aufbauen und Warten von Vorrichtungsanordnungen (z.B. Anwendungssysteme) durch entfembares Verbinden von elektronischen Modulen in der Form von Steckkarten mit den Steckleisten des VME-Busses. Einzelne Module (z.B. funktionale Komponenten von Anwendungssystemen) können einfach ausgetauscht oder ersetzt werden und Module können einfach entfernt oder hinzugefügt werden, so dass Vorrichtungsanordnungen effizient gewartet und flexibel erweitert und bestückt werden können. Der VME-Bus ist ein so genannter "address-mapped" Bus, das heisst innerhalb einer Vorrichtungsanordnung wird jedem der mit dem VME-Bus verbundenen Module ein eigener Adressbereich zugeordnet, der durch eine Basisadresse definierbar ist. In den herkömmlichen Systemen, in denen der VME-Bus zur Verbindung der einzelnen Module (Steckkarten) eingesetzt wird, werden die Adressbereiche, respektive die Basisadressen, manuell mittels Schaltern oder steckbaren Verbindungen, so genannten "Jumpers", auf jedem Modul festgelegt. Die manuelle Festlegung der Adressbereiche, respektive der Basisadresse, auf den Modulen ist einerseits zeitaufwendig und andererseits fehleranfällig, da Adressbereichskonflikte zwischen verschiedenen mit dem VME-Bus verbundenen Modulen nicht ausgeschlossen werden können. Weder in den älteren noch in den neusten Grundnormenspezifikationen (IEEE 1014 und IEC 821) des VME-Busses sind Mittel vorgesehen, die eine automatische Zuordnung der Adressbereiche zu den einzelnen Modulen ermöglichen. Dies wirkt sich nachteilig auf die ansonsten flexiblen Konfigurationsmöglichkeiten der auf dem VME-Bus basierenden Systeme aus.

Es ist eine Aufgabe dieser Erfindung, eine Vorrichtungsanordnung und ein Verfahren zur Zuordnung von Adressbereichen zu einem oder mehreren elektronischen Modulen, die mit einem VME-Bus verbunden sind, vorzuschlagen, welche insbesondere eine automatische Zuordnung der Adressbereiche ermöglichen.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass mindestens gewissen ersten der mit dem VME-Bus der Vorrichtungsanordnung verbindbaren Module (insbesondere den VME-Bus-Slaves) jeweils ein Konfigurations-Slave-Submodul zugeordnet ist, das so beschaffen ist, dass es, nachdem eine Betriebsspannung an die Vorrichtungsanordnung angelegt wird, das betreffende erste Modul in einen Konfigurationsmodus setzt und in diesem Konfigurationsmodus auf vordefinierte Signale auf dem VME-Bus wartet, und dass mindestens einem zweiten der Module (vorzugsweise aber nicht notwendigerweise ein VME-Bus-Master) ein Konfigurations-Master-Submodul zugeordnet ist, das so beschaffen ist, dass es den ersten Modulen, die sich im Konfigurationsmodus befinden, jeweils eine eindeutige Basisadresse zuordnet, indem es diese Basisadresse bestimmt und in einem Datenspeicher des betreffenden ersten Moduls speichert. Ein Konfigurations-Slave-Submodul, respektive ein Konfigurations-Master-Submodul, wird vorzugsweise einem der ersten Module, respektive einem der zweiten Module, dadurch zugeordnet, dass es direkt als Bestandteil des betreffenden Moduls ausgeführt wird oder dass es über eine Steckverbindung mit dem betreffenden Modul verbunden wird. Die Verwendung der oben beschriebenen Konfigurations-Slave-Submodule und Konfigurations-Master-Submodule hat den Vorteil, dass bei jeder Inbetriebnahme der Vorrichtungsanordnung den mit dem VME-Bus verbundenen elektronischen Modulen jeweils automatisch und dynamisch ein eigener, durch eine Basisadresse definierter Adressbereich zugeordnet wird, so dass sich ein manuelles Festlegen der Adressbereiche, respektive der Basisadresse, für jedes Modul mittels Schaltern oder "Jumpers" erübrigt und Adressbereichskonflikte zwischen verschiedenen mit dem VME-Bus verbundenen Modulen vermieden werden können.

In einer bevorzugten Ausführungsvariante umfassen die ersten Module jeweils einen Datenspeicher mit darin gespeicherter Modulinformation, und das Konfigurations-Master-Submodul ist so beschaffen, dass es die gespeicherte Modulinformation liest und die Basisadresse unter Berücksichtigung der gelesenen Modulinformation bestimmt. Durch die Berücksichtigung modulspezifischer Informationen bei der Bestimmung des Adressbereichs, können den Modulen abhängig von deren Modultyp automatisch unterschiedlich grosse Adressbereiche zugeteilt werden.

In einer bevorzugten Ausführungsvariante zeigen die Konfigurations-Slave-Submodule jeweils dem Konfigurations-Master-Submodul an, dass sie sich im Konfigurationsmodus befinden, indem sie, nachdem das SYSRESET-Signal des VME-Busses nach dem Anlegen der Betriebsspannung inaktiv wird, vordefinierte Signale auf dem VME-Bus anlegen, beispielsweise das SYSFAIL-Signal und das Interrupt-Request-Signal des VME-Busses, z.B. das IRQ2-Signal, und danach auf vordefinierte Signale auf dem VME-Bus warten, die beispielsweise einen vordefinierten Address-Modifier-Code auf den Address-Modifier-Leitungen des VME-Busses umfassen. Eine solche Ausführung der Konfigurations-Slave-Submodule und Konfigurations-Master-Submodule hat den Vorteil, dass ohne Verletzung der Normspezifikationen des VME-Busses die mit dem VME-Bus verbundenen Module in einen Konfigurationsmodus gebracht werden können, in welchem sie nur vordefinierte Signale vom Konfigurations-Master-Submodul akzeptieren.

In einer bevorzugten Ausführungsvariante führt das Konfigurations-Master-Submodul so lange Konfigurationszyklen durch, wie auf dem VME-Bus das Interrupt-Request-Signal, z.B. das IRQ2-Signal, und das SYSFAIL-Signal angelegt sind, wobei das Konfigurations-Master-Submodul innerhalb eines Konfigurationszyklus das IACK-Signal auf dem VME-Bus anlegt, einen vordefinierten Interrupt-Vektor über Datenleitungen des VME-Busses vom antwortenden Konfigurations-Slave-Submodul eines betreffenden ersten Moduls empfängt und die für dieses betreffende erste Modul bestimmte Basisadresse über die Datenleitungen des VME-Busses in einem Datenspeicher dieses betreffenden ersten Moduls speichert. Das Konfigurations-Slave-Submodul setzt das SYSFAIL-Signal und den Konfigurationsmodus für das ihm zugeordnete erste Modul zurück, wenn eine Basisadresse in einem Datenspeicher des ihm zugeordneten ersten Moduls gespeichert wurde. Eine solche Ausführung der Konfigurations-Slave-Submodule und Konfigurations-Master-Submodule hat den Vorteil, dass ohne Verletzung der Normspezifikationen des VME-Busses sämtlichen mit dem VME-Bus verbundenen Module automatisch ein Adressbereich, respektive eine Basisadresse zugeordnet werden kann, wobei die einzelnen Module weder in vordefinierter Reihenfolge noch über im voraus zugeordnete Steckleisten (Slots) mit dem VME-Bus verbunden werden müssen. Derart ausgeführte Konfigurations-Slave-Submodule und Konfigurations-Master-Submodule haben zudem den Vorteil, dass sie sowohl auf Modulen im Doppel-Europaformat als auch auf Modulen im Europaformat eingesetzt werden können.

Nachfolgend wird eine Ausführung der vorliegenden Erfindung anhand eines Beispieles beschrieben. Das Beispiel der Ausführung wird durch folgende beigelegte Figuren illustriert:
Figur 1 zeigt ein Blockdiagramm, das schematisch eine Vorrichtungsanordnung mit elektronischen Modulen illustriert, die über einen VME-Bus miteinander verbunden sind.
Figur 2 zeigt ein Flussdiagramm, das schematisch den Ablauf bei der automatischen Zuordnung von Adressbereichen zu elektronischen Modulen an einem VME-Bus illustriert.

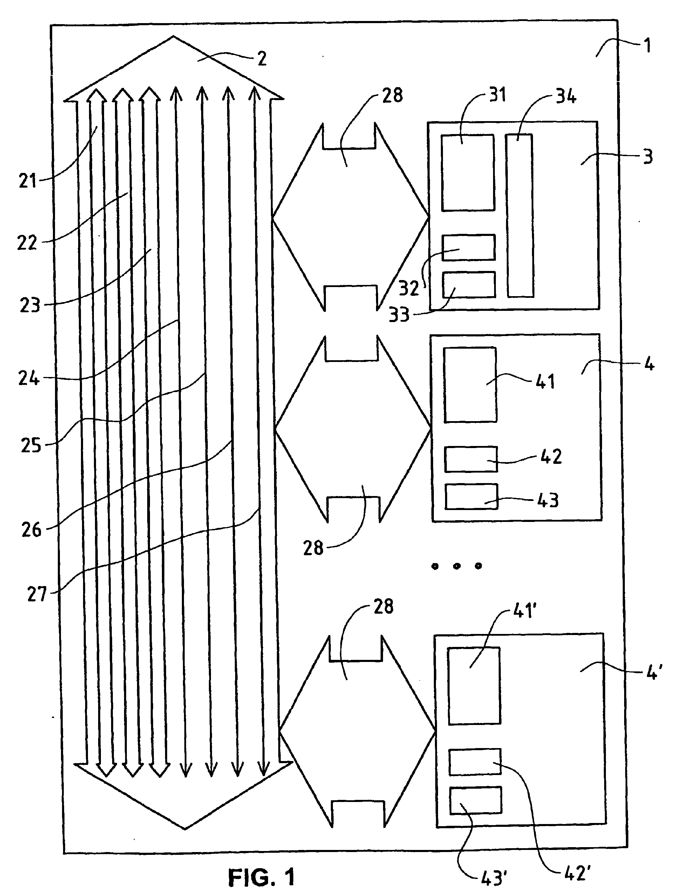

In der Figur 1 bezieht sich das Bezugszeichen 1 auf eine Vorrichtungsanordnung, in der elektronische Module 3, 4, 4' über Busschnittstellen 28 mit einem VME-Bus 2 verbunden sind. Die Vorrichtungsanordnung 1 umfasst beispielsweise ein Netzteil für die elektrische Speisung der elektronischen Module 3, 4, 4' sowie ein Gehäuse, an dem der VME-Bus 2 angebracht ist.

Der VME-Bus 2 kann sowohl für Module 3, 4, 4' im Doppel-Europaformat als auch bloss für Module 3, 4, 4' im Europaformat ausgelegt sein. Die Busschnittstellen 28 sind vorzugsweise Steckverbindungen gemäss den Normspezifikationen für den VME-Bus. Zur Illustration der nachfolgenden Beschreibung sind in der Figur 1 wenigstens gewisse Leitungen des VME-Busses 2 hervorgehoben, nämlich die Adressleitungen 21, die Address-Modifier-Leitungen 22, die Datenleitungen 23, die IACK-Leitung 24 (IACK=Interrupt Acknowledge), die IRQ2-Leitung 25 (IRQ2=Interrupt Request Nummer 2), die SYSFAIL-Leitung 26 und die SYSRESET-Leitung 27. Für die Verarbeitung eines Interrupt-Acknowledge-Signals sind die elektronischen Module 3, 4, 4' unter Verwendung der nicht separat dargestellten IACKIN- und IACKOUT-Leitungen des VME-Busses 2 in einer Prioritätskaskade, einer so genannten "Daisy-Chain", verkoppelt.

Das elektronische Modul 3 ist gemäss den Normspezifikationen für den VME-Bus als VME-Bus-Master ausgeführt und wird in den folgenden Abschnitten auch als Master-Modul 3 bezeichnet. Die elektronischen Module 4 und 4' sind gemäss den Normspezifikationen für den VME-Bus als VME-Bus-Slaves ausgeführt und werden in den folgenden Abschnitten auch als Slave-Module 4 und 4' bezeichnet.

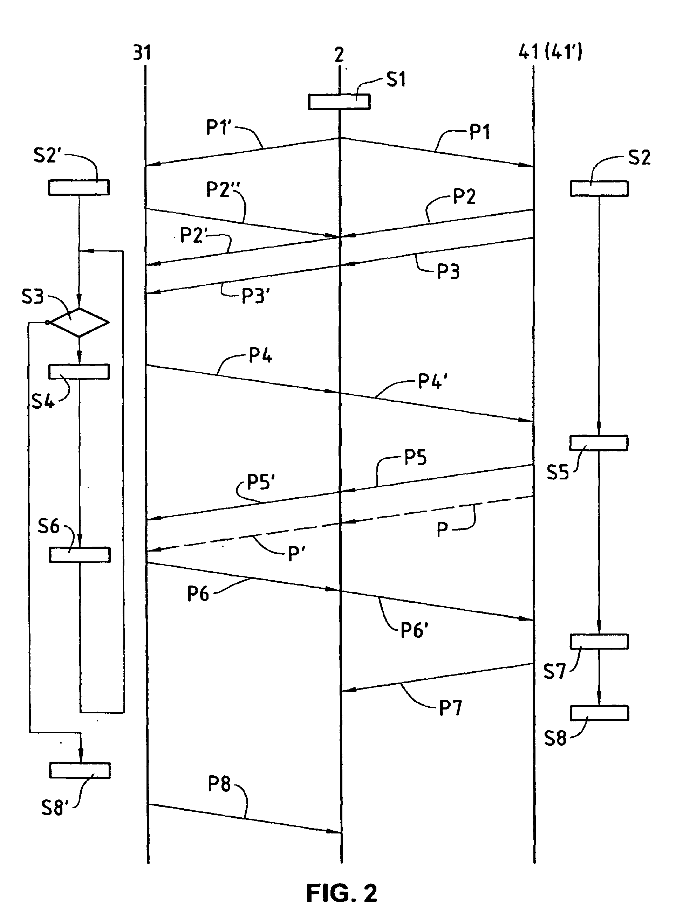

Wie in der Figur 1 illustriert wird, umfassen die Slave-Module 4 und 4' je ein Konfigurations-Slave-Submodul 41, respektive 41', deren Funktion in den nachfolgenden Abschnitten anhand der Figur 2 detailliert beschrieben wird. Die Slave-Module 4 und 4' umfassen zudem je einen Datenspeicher 42, respektive 42', vorzugsweise ein Datenregister, in dem die Basisadresse des Adressbereichs gespeichert wird, der dem betreffenden Slave-Modul 4, respektive 4', zugeordnet ist. Die Slave-Module 4 und 4' umfassen zudem je einen Datenspeicher 43, respektive 43', in dem Modulinformationen gespeichert sind. Die Modulinformationen umfassen beispielsweise einen Modultyp oder eine Grössenangabe des für das betreffende Modul erforderlichen Adressbereichs.

Das Master-Modul 3 umfasst ein Konfigurations-Master-Submodul 31, dessen Funktion ebenfalls in den nachfolgenden Abschnitten anhand der Figur 2 detailliert beschrieben wird. An dieser Stelle soll darauf hingewiesen werden, dass das Konfigurations-Master-Submodul 31 auch auf einem Slave-Modul 4 oder 4' angebracht sein könnte. Das Master-Modul 3 kann zudem auch einen Datenspeicher 32 zur Speicherung der Basisadresse des ihm zugeordneten Adressbereichs und einen Datenspeicher 33 mit Modulinfomationen umfassen.

Die Konfigurations-Slave-Submodule 41 und 41' sowie das Konfigurations-Master-Submodul 31 sind vorzugsweise als programmierte Hardwareschaltungen ausgeführt, beispielsweise mittels CPLD-Komponenten (CPLD=Complex Programmable Logic Devices), sie können aber auch als programmierte Softwaremodule auf einem Prozessor ausgeführt werden.

Wie in der Figur 2 dargestellt, wird im Schritt S1 auf dem VME-Bus 2 das SYSRESET-Signal auf der SYSRESET-Leitung 27 angelegt. Der Schritt S1 wird insbesondere durch die Systemrücksetzungssteuerung nach dem Anlegen einer Betriebsspannung an die Vorrichtungsanordnung 1 ausgeführt. Der Schritt S1 kann aber auch durch ein Master-Modul 3 oder durch ein Slave-Modul 4, 4' ausgeführt werden, beispielsweise durch das Konfigurations-Master-Submodul 31 oder durch ein anderes Steuermodul eines VME-Bus-Masters oder VME-Bus-Slaves. Durch die Pfeile P1 und P1' wird angedeutet, dass das SYSRESET-Signat über den VME-Bus 2 an das Konfigurations-Master-Submodul 31 und das Konfigurations-Slave-Submodul 41 (respektive 41') geleitet wird, worauf im Konfigurations-Slave-Submodul 41 (41'), respektive im Konfigurations-Master-Submodul 31, die Schritte S2, respektive S2' durchgeführt werden.

Im Schritt S2 wird das Slave-Modul 4 (4') durch das Konfigurations-Slave-Submodul 41 (41') in einen Konfigurationsmodus gesetzt. In diesem Konfigurationsmodus werden durch das Slave-Modul 4 (4') nur vordefinierte Signale auf dem VME-Bus 2 beachtet. Das Konfigurations-Slave-Submodul 41 (41') antwortet nämlich nur auf vordefinierte Address-Modifier-Codes auf den Address-Modifier-Leitungen 22, insbesondere ein definierter Code im benutzerdefinierbaren Bereich, zum Beispiel ein Code mit dem hexadezimalen Wert "1"F". Das heisst das Konfigurations-Slave-Submodul 41 reagiert nur auf Schreib- oder Lesezugriffe, die mit dem vordefinierten Address-Modifier-Code "1F" ausgeführt werden. Im Schritt S2 legt das Konfigurations-Slave-Submodul 41 (41') zudem auf der SYSFAIL-Leitung 26 das SYSFAIL-Signal an und gibt auf der IRQ2-Leitung 25 ein IRQ2-Signal aus. Durch die Pfeile P2 und P2' wird angedeutet, dass das SYSFAIL-Signal an den VME-Bus 2 angelegt wird und durch das Konfigurations-Master-Submodul 31 detektiert werden kann. Durch die Pfeile P3 und P3' wird angedeutet, dass der Interrupt IRQ2 an den VME-Bus 2 angelegt wird und durch das Konfigurations-Master-Submodul 31 detektiert wird.

Im Schritt S2' wird das Master-Modul 3 durch das Konfigurations-Master-Submodul 31 in den Master-Konfigurationsmodus gesetzt und auf der SYSFAIL-Leitung 26 das SYSFAIL-Signal angelegt. Durch den Pfeil P2" wird angedeutet, dass das SYSFAIL-Signal durch das Konfigurations-Master-Submodul 31 an den VME-Bus 2 angelegt wird.

Im Konfigurations-Master-Submodul 31, das im Schritt S2' das Master-Modul 3 in den Master-Konfigurationsmodus gesetzt hat, wird im Schritt S3 nach der Detektion des IRQ2-Signals überprüft, ob das SYSFAIL-Signal auf dem VME-Bus 2 angelegt ist. Solange auf dem VME-Bus 2 das IRQ2-Signal und das SYSFAIL-Signal anliegen, das heisst, solange sich mindestens ein Slave-Modul 4, 4' im Konfigurationsmodus befindet, führt das Konfigurations-Master-Submodul 31 Konfigurationszyklen durch. Falls auf dem VME-Bus 2 kein IRQ2-Signal angelegt ist, endet der Master-Konfigurationsmodus für das Master-Modul 3 im Schritt S8'.

In jedem Konfigurationszyklus werden durch das Konfigurations-Master-Submodul 31 die Schritte S4 und S6 durchgeführt. Im Schritt S4 wird durch das Konfigurations-Master-Submodul 31 ein IACK-Signal ausgegeben. Durch die Pfeile P4 und P4' wird angedeutet, dass das IACK-Signal auf den VME-Bus 2 angelegt wird und durch das Konfigurations-Slave-Submodul 41 (41') detektiert wird.

Nach der Detektierung des IACK-Signals im Schritt S5 antwortet das Konfigurations-Slave-Submodul 41 (41') mit einem vordefinierten Interrupt-Vektor, der an die Datenleitungen 23 angelegt wird. Mit den Pfeilen P5 und P5' wird angedeutet, dass der Interrupt-Vektor an den VME-Bus 2 angelegt wird und durch das Konfigurations-Master-Submodul 31 detektiert wird.

Im Schritt S6 wird nach der Detektion des Interrupt-Vektors der Adressbereich, respektive die entsprechende Basisadresse, für das Slave-Modul 4 (4') bestimmt. Die Bestimmung der Basisadresse erfolgt unter Berücksichtigung eines im Datenspeicher 34 gespeicherten Speicherbelegungsplans (einem so genannten "Memory Map") und beispielsweise zusätzlich durch vorgängiges Lesen der im Datenspeicher 43 (43') gespeicherten Modulinformation. Durch die gestrichelten Pfeile P und P' wird angedeutet, dass durch das Konfigurations-Master-Submodul 31 Modulinformationen über den VME-Bus 2 vom Slave-Modul 4 (4') gelesen werden. Der Speicherbelegungsplan enthält die bereits zugeordneten Basisadressen, beispielsweise eine Verknüpfung von Basisadresse, Speicherbereichsgrösse, Modulnummer und Modultyp. Die bestimmte Basisadresse wird vom Konfigurations-Master-Submodul 31 in den Datenspeicher 42 (42') geschrieben und im Speicherbelegungsplan gespeichert. Das Konfigurations-Master-Submodul 31 sendet anschliessend noch einen Code, insbesondere den hexadezimalen Wert "55", über den VME-Bus 2 an das Konfigurations-Slave-Submodul 41 (41') und zeigt dem Konfigurations-Slave-Submodul 41 (41') damit an, den Konfigurationsmodus abzuschliessen. Das Lesen von Modulinformationen aus dem Datenspeicher 43 (43'), das Schreiben von Basisadressen in den Datenspeicher 42 (42') und das Schreiben des hexadezimalen Werts "55" erfolgt über die Datenleitungen 23 des VME-Bus 2 unter Verwendung des entsprechenden Address-Modifier-Codes mit dem hexadezimalen Wert "1F". Mit den Pfeilen P6 und P6' wird angedeutet, dass die bestimmte Basisadresse und der hexadezimale Code "55" über den VME-Bus 2 an das Slave-Modul 4 (4') übermittelt werden.

Im Schritt S7 wird durch das Konfigurations-Siave-Submodul 41 (41') das SYSFAIL-Signal zurückgesetzt (inaktiviert). Durch den Pfeil P7 wird angedeutet, dass das Konfigurations-Slave-Submodul 41 (41') das SYSFAIL-Signal auf dem VME-Bus 2 zurücksetzt.

Im Schritt S8 wird der Konfigurationsmodus durch das Konfigurations-Slave-Submodul 41 (41') für das Slave-Modul 4 (4') beendet und das Slave-Modul 4 (4') kann auf normierte VME-Bus-Zyklen reagieren.

Wie in der Figur 2 illustriert wird, prüft das Konfigurations-Master-Submodul 31 nach der Ausführung des Schritts S6, im Schritt S3, ob auf der SYSFAIL-Leitung 26 noch ein SYSFAIL-Signal eines weiteren Slave-Moduls 4' angelegt ist.

Im Schritt S8' wird durch das Konfigurations-Master-Submodul 31 das SYSFAIL-Signal zurückgesetzt (inaktiviert) und der Konfigurationsmodus für das Master-Modul 3 beendet, wonach das Master-Modul 3 auf normierte VME-Bus-Zyklen reagieren kann.

Neben Modulen 3, 4, 4', die mit den beschriebenen Konfigurations-Master-Submodulen 31 und Konfigurations-Slave-Subrnodulen 41, 41' versehen sind, können in der Vorrichtungsanordnung 1 gleichzeitig auch herkömmliche elektronische Module verwendet werden, deren Basisadressen auf dem Modul mittels Schaltern oder "Jumpers" definiert sind. Die derart zugeordneten Adressbereiche werden im oben erwähnten Speicherbelegungsplan im Datenspeicher 34 gespeichert.

## Patentansprüche

1. Vorrichtungsanordnung (1) umfassend:
- einen VME-Bus (2),
- ein oder mehrere mit dem VME-Bus (2) verbindbare Module (3, 4, 4'), denen jeweils ein spezifischer, durch eine Basisadresse definierter Adressbereich zuweisbar ist,
**dadurch gekennzeichnet,**
**dass** mindestens gewissen ersten der Module (4, 4') jeweils ein Konfigurations-Slave-Submodul (41, 41') zugeordnet ist, das so beschaffen ist, dass es, nachdem eine Betriebsspannung an die Vorrichtungsanordnung (1) angelegt wird, das betreffende erste Modul (4, 4') in einen Konfigurationsmodus setzt und in diesem Konfigurationsmodus auf vordefinierte Signale auf dem VME-Bus (2) wartet, und
**dass** mindestens einem zweiten der Module (3) ein Konfigurations-Master-Submodul (31) zugeordnet ist, das so beschaffen ist, dass es den ersten Modulen (4, 4'), die sich im Konfigurationsmodus befinden, jeweils eine eindeutige Basisadresse zuordnet, indem es diese Basisadresse bestimmt und in einem Datenspeicher (42, 42') des betreffenden ersten Moduls (4, 4') speichert.

2. Vorrichtungsanordnung (1) gemäss Anspruch 1, **dadurch gekennzeichnet, dass** die ersten Module (4, 4') jeweils einen Datenspeicher (43, 43') mit darin gespeicherter Modulinformation umfassen, und dass das Konfigurations-Master-Submodul (31) so beschaffen ist, dass es die gespeicherte Modulinformation liest und die Basisadresse unter Berücksichtigung der gelesenen Modulinformation bestimmt.

3. Vorrichtungsanordnung (1) gemäss einem der Ansprüche 1 oder 2, **dadurch gekennzeichnet, dass** das Konfigurations-Slave-Submodul (41, 41') so beschaffen ist, dass es, nachdem das SYSRESET-Signal des VME-Busses (2) nach dem Anlegen der Betriebsspannung inaktiv wird, dem Konfigurations-Master-Submodul (31) den Konfigurationsmodus durch Anlegen von vordefinierten Signalen auf dem VME-Bus (2) anzeigt und dass es danach auf vordefinierte Signale auf dem VME-Bus (2) wartet.

4. Vorrichtungsanordnung (1) gemäss Anspruch 3, **dadurch gekennzeichnet, dass** die durch das Konfigurations-Slave-Submodul (41, 41') auf dem VME-Bus (2) angelegten vordefinierten Signale das SYSFAIL-Signal und ein Interrupt-Request-Signal des VME-Busses (2) umfassen, und dass die ersten der auf dem VME-Bus (2) erwarteten vordefinierten Signale einen vordefinierten Address-Modifier-Code auf den Address-Modifier-Leitungen (22) des VME-Bus (2) umfassen.

5. Vorrichtungsanordnung (1) gemäss Anspruch 4, **dadurch gekennzeichnet, dass** das Konfigurations-Master-Submodul (31) so beschaffen ist, dass es so lange Konfigurationszyklen durchführt wie auf dem VME-Bus. (2) das Interrupt-Request-Signal und das SYSFAIL-Signal angelegt sind, wobei das Konfigurations-Master-Submodul (31) so beschaffen ist, dass es innerhalb eines Konfigurationszyklus das IACK-Signal auf dem VME-Bus (2) anlegt, einen vordefinierten Interrupt-Vektor über Datenleitungen (23) des VME-Busses (2) vom antwortenden Konfigurations-Slave-Submodul (41, 41') eines betreffenden ersten Moduls (4, 4') empfängt und die für dieses betreffende erste Modul (4, 4') bestimmte Basisadresse über die Datenleitungen (23) des VME-Busses (2) in einem Datenspeicher (42, 42') dieses betreffenden ersten Moduls (4, 4') speichert, und dass das Konfigurations-Slave-Submodul (41, 41') so beschaffen ist, dass es das SYSFAIL-Signal und den Konfigurationsmodus für das ihm zugeordnete erste Modul (4, 4') zurücksetzt, wenn eine Basisadresse in einem Datenspeicher (42, 42') des ihm zugeordneten ersten Moduls (4, 4') gespeichert wurde.

6. Verfahren zum Zuordnen von Adressbereichen, die durch eine Basisadresse definiert sind, zu einem oder mehreren mit einem VME-Bus (2) verbundenen Modulen (4, 4') einer Vorrichtungsanordnung (1), **dadurch gekennzeichnet,**
**dass**, nachdem eine Betriebsspannung an die Vorrichtungsanordnung (1) angelegt wird, mindestens gewisse erste der Module (4, 4') jeweils durch ein ihnen zugeordnetes Konfigurations-Slave-Submodul (41, 41') in einen Konfigurationsmodus gesetzt werden und in diesem Konfigurationsmodus auf vordefinierte Signale auf dem VME-Bus (2) warten, und
**dass** den ersten Modulen (4, 4'), die sich im Konfigurationsmodus befinden, durch ein mindestens einem zweiten der Module (3) zugeordnetes Konfigurations-Master-Submodul (31) jeweils eine eindeutige Basisadresse zugeordnet wird, wobei diese Basisadresse jeweils durch das Konfigurations-Master-Submodul (31) bestimmt und in einem Datenspeicher (42, 42') des betreffenden ersten Moduls (4, 4') gespeichert wird.

7. Verfahren gemäss Anspruch 6, **dadurch gekennzeichnet, dass** das Konfigurations-Master-Submodul (31) in Datenspeichern (43, 43') der ersten Module (4, 4') gespeicherte Modulinformation liest und die Basisadressen unter Berücksichtigung der gelesenen Modulinformation bestimmt.

8. Verfahren gemäss einem der Ansprüche 6 oder 7, **dadurch gekennzeichnet, dass** die Konfigurations-Slave-Submodule (41, 41'), nachdem das SYSRESET-Signal des VME-Busses (2) nach dem Anlegen der Betriebsspannung inaktiv wird, jeweils dem Konfigurations-Master-Submodul (31) den Konfigurationsmodus durch Anlegen von vordefinierten Signalen auf dem VME-Bus (2) anzeigen und dass sie danach auf vordefinierte Signale auf dem VME-Bus (2) warten.

9. Verfahren gemäss Anspruch 8, **dadurch gekennzeichnet, dass** die durch das Konfigurations-Slave-Submodul (41, 41') auf dem VME-Bus (2) angelegten vordefinierten Signale das SYSFAIL-Signal und ein Interrupt-Request-Signal des VME-Busses (2) umfassen, und dass die ersten der auf dem VME-Bus (2) erwarteten vordefinierten Signale einen vordefinierten Address-Modifier-Code auf den Address-Modifier-Leitungen (22) des VME-Bus (2) umfassen.

10. Verfahren gemäss Anspruch 9, **dadurch gekennzeichnet, dass** das Konfigurations-Master-Submodul (31) so lange Konfigurationszyklen durchführt, wie auf dem VME-Bus (2) das Interrupt-Request-Signal und das SYSFAIL-Signal angelegt sind, wobei das Konfigurations-Master-Submodul (31) innerhalb eines Konfigurationszyklus das IACK-Signal auf dem VME-Bus (2) anlegt, einen vordefinierten Interrupt-Vektor über Datenleitungen (23) des VME-Busses (2) vom antwortenden Konfigurations-Slave-Submodul (41, 41') eines betreffenden ersten Moduls (4, 4') empfängt und die für dieses betreffende erste Modul (4, 4') bestimmte Basisadresse über die Datenleitungen (23) des VME-Busses (2) in einem Datenspeicher (42, 42') dieses betreffenden ersten Moduls (4, 4') speichert, und dass das Konfigurations-Slave-Submodul (41, 41') das SYSFAIL-Signal und den Konfigurationsmodus für das ihm zugeordnete erste Modul (4, 4') zurücksetzt, wenn eine Basisadresse in einem Datenspeicher (42, 42') des ihm zugeordneten ersten Moduls (4, 4') gespeichert wurde.

## Revendications

1. Dispositif (1) comprend :
- un bus VME (Versa Module Eurocard) (2),
- un ou plusieurs modules (3, 4, 4') reliables au bus VME (2), auxquels peut être attribuée respectivement une zone spécifique d'adresses définie par une adresse de base,
**caractérisé en ce**
**qu'**au moins certains premiers des modules (4, 4') sont associés respectivement à un module secondaire esclave de configuration (41, 41') qui est configuré de sorte qu'après avoir appliqué une tension de service au dispositif (1), cela amène le premier module concerné (4, 4') dans un mode de configuration et que dans ce mode de configuration, il attend des signaux prédéfinis sur le bus VME (2) et
**qu'**au moins un des seconds modules (3) est associé à un module secondaire maître de configuration (31) qui est configuré d sorte qu'il associe aux premiers modules (4, 4') qui se trouvent dans le mode de configuration, respectivement une adresse univoque de base, dans le fait qu'il définit cette adresse de base et la stocke dans une mémoire de données (42, 42') du premier module considéré (4, 4').

2. Dispositif (1) selon la revendication 1, **caractérisé en ce que** les premiers modules (4, 4') comprennent respectivement une mémoire de données (43, 43') stockant l'information de module et **en ce que** le module secondaire maître de configuration (31) est réalisé de sorte qu'il lit l'information de module stockée et définit l'adresse de base en tenant compte de l'information de module lue.

3. Dispositif (1) selon l'une des revendications 1 ou 2, **caractérisé en ce que** le module secondaire esclave de configuration (41, 41') est réalisé de sorte qu'une fois que le signal SYSRESET du bus VME 2 devient inactif après l'application de la tension de service, il affiche pour le module secondaire maître de configuration (31) le mode de configuration par application de signaux prédéfinis sur le bus VME (2) et **en ce qu'**il attend ensuite les signaux prédéfinis sur le bus VME (2).

4. Dispositif (1) selon la revendication 3, **caractérisé en ce que** les signaux prédéfinis appliqués par le module secondaire esclave de configuration (41, 41') sur le bus VME (2) comprennent le signal SYSFAIL et un signal de requête d'interruption du bus VME (2) et **en ce que** les premiers des signaux prédéfinis attendus sur le bus VME (2) comprennent un code de modificateur d'adresse prédéfini sur les lignes de modificateur d'adresse (22) du bus VME (2).

5. Dispositif (1) selon la revendication 4, **caractérisé en ce que** le module secondaire maître de configuration (31) est configuré de sorte qu'il exécute des cycles de configuration aussi longtemps que le signal de requête d'interruption et le signal SYSFAIL sont appliqués sur le bus VME (2), le module secondaire maître de configuration (31) étant configuré de sorte qu'il applique à l'intérieur d'un cycle de configuration le signal IACK sur le bus VME (2), il reçoit un vecteur prédéfini d'interruption par les lignes de données (23) du bus VME (2) de la part du module secondaire esclave de configuration (41, 41') répondant d'un premier module concerné (4, 4') et stocke la première adresse de base défini pour ce module concerné (4, 4') dans une mémoire de données (42, 42') de ce premier module concerné (4, 4') et **en ce que** le module secondaire esclave de configuration (41, 41') est réalisé de sorte qu'il réinitialise le signal SYSFAIL et le mode de configuration pour le premier module (4, 4') qui lui est associé quand une adresse de base a été stockée dans une mémoire (42, 42') du premier module (4, 4') qui lui est associé.

6. Procédé pour l'association de zones d'adresse qui sont définies par une adresse de base à un ou plusieurs modules (4, 4') d'un dispositif (1) reliés à un bus VME (2), **caractérisé en ce**
**qu'**après l'application d'une tension de service au dispositif (1), au moins certains premiers des modules (4, 4') sont amenés respectivement par un module secondaire esclave de configuration (41, 41') qui lui est associé dans un mode de configuration et attendent dans ce mode de configuration des signaux prédéfinis sur un bus VME (2), et
en ce que les premiers modules (4, 4') qui se trouvent dans le mode de configuration sont associés par un module secondaire maître de configuration (31) associé au moins à un second des modules (3) respectivement à une adresse de base univoque, cette adresse de base étant définie respectivement par le module secondaire maître de configuration (31) et étant stockée dans une mémoire de donnée (42, 42') du premier module considéré (4, 4').

7. Procédé selon la revendication 8, **caractérisé en ce que** le module secondaire maître de configuration (31) lit dans des mémoires de données (43, 43') des premiers modules (4, 4') une information de module stockée et définit les adresses de base en tenant compte de l'information de module lue.

8. Procédé selon l'une des revendications 6 ou 7, **caractérisé en ce que** les modules secondaires esclaves de configuration (41, 41'), après que le signal SYSRESET du bus VME (2) devient inactif après l'application de la tension de service, affiche respectivement pour le module secondaire maître de configuration (31) le mode de configuration par application de signaux prédéfinis sur le bus VME (2) et **en ce qu'**ensuite ils attendent les signaux prédéfinis sur le bus VME (2).

9. Procédé selon la revendication 8, **caractérisé en ce que** les signaux prédéfinis appliqués par le module secondaire esclave de configuration (41, 41') sur le bus VME (2) comprennent le signal SYSFAIL et un signal de requête d'interruption du bus VME (2) et **en ce que** les premiers signaux prédéfinis attendus sur le bus VME (2) comprennent un code prédéfini de modification d'adresse sur les lignes de modificattion d'adresse (22) du bus VME (2).

10. Procédé selon la revendication 9, **caractérisé en ce que** le module secondaire maître de configuration (31) exécute des cycles de configuration aussi longtemps que le signal SYSFAIL et un signal de requête d'interruption sont appliqués sur le bus VME (2), le module secondaire maître de configuration (31) appliquant à l'intérieur d'un cycle de configuration le signal IACK sur le bus VME (2), reçoit un vecteur d'interruption prédéfini par des lignes de données (23) du bus VME (2) de la part d'un module secondaire esclave de configuration (41, 41') répondant d'un premier module considéré (4, 4') et stockent l'adresse de base définie pour ce premier module considéré (4, 4') par les lignes de données (23) du bus VME (2) dans une mémoire de données (42, 42') de ce premier module considéré (4, 4') et **en ce que** le module secondaire esclave de configuration (41, 41') réinitialise le signal SYSFAIL et le mode de configuration pour le premier module qui lui est associé (4, 4') quand une adresse de base a été stockée dans une mémoire de donnée (42, 42") du premier module qui lui est associé (4, 4').

## Claims

1. Apparatus configuration (1) comprising:
- a VME bus (2),
- one or more modules (3, 4, 4') connectible to the VME bus (2), to each of which modules a specific address space defined by a base address is assignable,
**characterised**
**in that** assigned to at least certain first of the modules (4, 4') is a slave configuration sub-module (41, 41'), which is designed such that, after an operating voltage has been applied to the apparatus configuration (1), the respective first module (4, 4') is put into a configuration mode and waits in this configuration mode for predefined signals on the VME bus, and
- assigned to at least one second of the modules is a master configuration sub-module (31) which is designed such that it assigns to the first modules (4, 4'), which are in configuration mode, an unambiguous base address in that it selects this base address and stores it in a data memory (42, 42') of the respective first module (4, 4').

2. Apparatus configuration (1) according to claim 1, **characterised in that** the first modules (4, 4') each comprise a data memory (43, 43') with module information stored therein, and **in that** the master configuration submodule (31) is designed such that it reads the stored module information and selects the base address taking into consideration the read module information.

3. Apparatus configuration (1) according to one of the claims 1 or 2, **characterised in that** the slave configuration sub-module (41, 41') is designed such that, after the SYSRESET signal of the VME bus (2) becomes inactive following application of the operating voltage, it shows the configuration mode to the master configuration sub-module (31) by applying predefined signals on the VME bus (2) and **in that** afterwards it waits for predefined signals on the VME bus (2).

4. Apparatus configuration (1) according to claim 3, **characterised in that** the predefined signals applied to the VME bus (2) by the slave configuration sub-module (41, 41') comprise the SYSFAIL signal and an interrupt request signal of the VME bus (2), and **in that** the first of the predefined signals awaited on the VME bus (2) comprise a predefined address-modifier code on the address modifier lines (22) of the VME bus (2).

5. Apparatus configuration (1) according to claim 4, **characterised in that** the master configuration sub-module (31) is designed such that it carries out configuration cycles as long as the interrupt request signal and the SYSFAIL signal are applied on the VME bus (2), the master configuration submodule (31) being designed such that within a configuration cycle it applies the IACK signal on the VME bus (2), receives a predefined interrupt vector from the answering slave configuration sub-module (41, 41') of a respective first module (4, 4') via data links (23) of the VME (2), and stores the base address selected for this respective first module (4, 4') in a data memory (42, 42') of this respective first module (4, 4') via data links (23) of the VME bus (2), and **in that** the slave configuration sub-module (41, 41') is designed such that it resets the SYSFAIL signal and the configuration mode for the first module (4, 4') assigned to it when a base address has been stored in a data memory (42, 42') of the first module (4, 4') assigned to it.

6. Method of assigning address spaces, which are defined by a base address, to one or more modules (4, 4'), connected to a VME bus (2), of an apparatus configuration (1), **characterised**
**in that** after an operating voltage has been applied to the apparatus configuration (1), at least certain first of the modules (4, 4') are each put in a configuration mode by a slave configuration sub-module (41, 41') assigned to them and wait in this configuration mode for predefined signals on the VME bus (2), and
**in that** an unambiguous base address is assigned to each of the first modules (4, 4'), which are in configuration mode, by a master configuration submodule (31) assigned to at least a second of the modules (3), this base address being selected in each case by the master configuration sub-module (31) and being stored in a data memory (42, 42') of the respective first module (4, 4').

7. Method according to claim 6, **characterised in that** the master configuration sub-module (31) reads module information stored in data memories (43, 43') of the first module (4, 4') and selects the base address taking into consideration the read module information.

8. Method according to one of the claims 6 or 7, **characterised in that** after the SYSRESET signal of the VME bus (2) becomes inactive following application of the operating voltage, the slave configuration sub-module (41, 41') shows the configuration mode to the master configuration sub-module (31) in each case by applying predefined signals on the VME bus (2) and **in that** afterwards it waits for predefined signals on the VME bus (2).

9. Method according to claim 8, **characterised in that** the predefined signals applied to the VME bus (2) by the slave configuration sub-module (41, 41') comprise the SYSFAIL signal and an interrupt request signal of the VME bus (2), and **in that** the first of the predefined signals awaited on the VME bus (2) comprise a predefined address-modifier code on the address modifier lines (22) of the VME bus (2).

10. Method according to claim 9, **characterised in that** the master configuration sub-module (31) carries out configuration cycles as long as the interrupt request signal and the SYSFAIL signal are applied on the VME bus (2), whereby the master configuration sub-module (31) applies the IACK signal on the VME bus (2) within a configuration cycle, receives a predefined interrupt vector from the answering slave configuration sub-module (41, 41') of a respective first module (4, 4') via data links (23) of the VME bus (2), and stores the base address selected for this respective first module (4, 4') in a data memory (42, 42') of this respective first module (4, 4') via data links (23) of the VME bus (2), and **in that** the slave configuration sub-module (41, 41') resets the SYSFAIL signal and the configuration mode for the first module (4, 4') assigned to it when a base address has been stored in a data memory (42, 42') of the first module (4, 4') assigned to it.
